# EUROPÄISCHE PATENTSCHRIFT

(11) **EP 4 103 871 B1**
(45) Veröffentlichungstag und Bekanntmachung des Hinweises auf die Patenterteilung: **15.10.2025**
(21) Anmeldenummer: 21700475.3
(22) Anmeldetag: 06.01.2021
(51) Int. Cl.: F16L 1/028, F16L 59/15

(54) **VERFAHREN ZUR ERRICHTUNG EINES ROHRLEITUNGSABSCHNITTES EINES ROHRSYSTEMS SOWIE ROHRLEITUNGSABSCHNITT EINES ROHRSYSTEMS IN EINEM WÄRMENETZ**
METHOD FOR SETTING UP A PIPELINE SECTION OF A PIPE SYSTEM, AND PIPELINE SECTION OF A PIPE SYSTEM IN A HEAT NETWORK
PROCÉDÉ DE MISE EN PLACE D'UNE SECTION DE PIPELINE D'UN SYSTÈME DE CONDUITE, ET SECTION DE PIPELINE D'UN SYSTÈME DE CONDUITE DANS UN RÉSEAU DE CHALEUR

(30) Priorität: 10.02.2020 DE 102020103331
(43) Veröffentlichungstag der Anmeldung: 21.12.2022
(73) Patentinhaber: Technische Universität Darmstadt, 64289 Darmstadt (DE)
(72) Erfinder: SASS, Ingo, 64625 Bensheim (DE); WELSCH, Bastian, 64285 Darmstadt (DE); SCHEDEL, Markus, 64285 Darmstadt (DE); FORMHALS, Julian, 64287 Darmstadt (DE)
(74) Vertreter: Habermann Intellectual Property Partnerschaft von Patentanwälten mbB
(86) Internationale Anmeldenummer: PCT/EP2021/050139
(87) Internationale Veröffentlichungsnummer: WO 2021/160349

(56) Entgegenhaltungen:
- EP-A1- 3 165 831
- EP-A2- 1 319 898
- EP-B1- 1 319 898
- DE-A1- 10 202 186
- DE-U1- 29 618 888

## Beschreibung

Die Erfindung betrifft ein Verfahren zur Errichtung eines Rohrleitungsabschnittes eines Rohrsystems in einem Wärmenetz, welches zur Übertragung eines Wärmeübertragungsfluides zwischen einem Wärmelieferanten und mindestens einem Wärmeabnehmer vorgesehen ist, wobei in dem Rohrleitungsabschnitt ein sich über den Rohrleitungsabschnitt erstreckender Graben ausgehoben wird, wobei in den Graben eine sich über den Rohrleitungsabschnitt erstreckende Rohrleitung zur Übertragung des Wärmeübertragungsfluides entlang des Rohrleitungsabschnittes eingebracht und in einem die Rohrleitung umgebenden Bettungsmaterial eingebettet wird, und wobei der Graben anschließend mit einem Verfüllungsmaterial wieder verfüllt wird.

Ein Fernwärmesystem weist üblicherweise einen Wärmelieferanten auf, der über ein Fernwärmenetz mit einem oder mehreren Wärmeabnehmern verbunden ist. Mit dem Wärmelieferanten, beispielsweise ein Heizkraftwerk, wird aus geeigneten Energieträgern Wärme erzeugt und in ein Wärmeübertragungsfluid eingebracht. Während frühe Fernwärmesysteme oftmals erhitzten Wasserdampf als Wärmeübertragungsfluid verwendet haben, wird bei den meisten aktuell betriebenen Fernwärmesystemen erhitztes Wasser als Wärmeübertragungsfluid verwendet. Das Fernwärmenetz verbindet den Wärmelieferanten mit dem einen Wärmeabnehmer oder den mehreren Wärmeabnehmern, wobei das Wärmeübertragungsfluid in einem geschlossenen Rohrsystem des Fernwärmenetzes zirkuliert und Wärme von dem Wärmelieferanten an die Wärmeabnehmer überträgt. Die von dem Wärmelieferanten an die Wärmeabnehmer übertragene Fernwärme wird regelmäßig für eine zentrale thermische Energieversorgung von mehreren Gebäuden eingesetzt. Ein derartiges Fernwärmesystem kann energieeffizient und ökologisch sowie ökonomisch sinnvoll betrieben werden, sofern die Wärmeerzeugung in dem zentralen Wärmelieferanten effizient durchgeführt werden kann, und die in das Wärmeübertragungsfluid eingebrachte Wärmeenergie in dem Fernwärmenetz ohne übermäßige Wärmeverluste an die einzelnen Wärmeabnehmer übertragen werden kann. Oftmals kann mit dem Wärmelieferanten auch ansonsten kaum nutzbare Wärmeenergie wie beispielsweise Abwärme bei industriellen Produktionsprozessen zur Erwärmung des Wärmeübertragungsfluides verwendet werden.

Dabei kommt einem Wärmenetz, welches einen Wärmelieferanten mit den mehreren Wärmeabnehmern verbindet, eine große Bedeutung zu. Ein Wärmenetz kann ein Fernwärmenetz oder ein Nahwärmenetz sein. Mit Hilfe eines Wärmenetzes kann ein erwärmtes Wärmeübertragungsfluid oder auch ein gekühltes Wärmeübertragungsfluid von dem Wärmelieferanten an einen oder mehrere Wärmeabnehmer übertragen werden. In den nachfolgenden Ausführungen wird überwiegend auf ein Fernwärmenetz und auf die Übertragung von Wärmeenergie mit Hilfe eines erwärmten Wärmeübertragungsfluids eingegangen, wobei dies nicht als eine Beschränkung auf eine spezielle Art des Wärmenetzes oder der Wärmeenergieübertragung verstanden werden soll. Für die Errichtung des Wärmenetzes fallen oftmals vergleichsweise hohe Kosten an, sodass das Wärmenetz ein wesentlicher Kostenfaktor bei der ökonomischen Beurteilung eines Wärmesystems und insbesondere eines Fernwärmesystems ist. Um den Verlust von Wärmeenergie bei der Übertragung von dem zentralen Wärmelieferanten zu den verschiedenen Wärmeabnehmern so gering wie möglich zu halten, wird für ein Wärmenetz regelmäßig ein unter der Erde verlegtes, wärmegedämmtes Rohrsystem verwendet. Das Rohrsystem in einem Rohrleitungsabschnitt des Wärmenetzes wird dabei regelmäßig aus einzelnen Rohrleitungselementen zusammengesetzt, die doppelwandig ausgestaltet sind und über eine möglichst gute und effiziente Wärmedämmung verfügen. Geeignete doppelwandige Rohrsystemelemente weisen in aller Regel ein inneres Mediumrohr und ein das Mediumrohr konzentrisch umgebendes Mantelrohr auf, wobei zwischen dem Mediumrohr und dem Mantelrohr eine geeignete thermische Isolation angeordnet ist. Das Mediumrohr und das Mantelrohr sind aus einem geeigneten Kunststoffmaterial oder aus Metall hergestellt, wobei das Mantelrohr einen mechanischen Schutz vor den üblicherweise auftretenden Belastungen bewirken soll, die bei einem erdverlegten Rohrsystem eines Wärmenetzes auf die einzelnen Rohrleitungselemente einwirken können. Die thermische Isolation kann beispielsweise ein geeigneter Kunststoffschaum sein, wobei in vielen Fällen ein Polyurethanschaum als thermische Isolation verwendet wird.

Die einzelnen Rohrleitungselemente sind üblicherweise aufwändig hergestellte Verbundrohre mit entsprechend hohen Herstellungskosten. Die einzelnen Rohrleitungselemente werden als vorgefertigte Stangenware hergestellt und an den ausgehobenen Graben ausgeliefert, um zunächst darin eingebettet und anschließend miteinander verbunden zu werden. Dabei müssen die einzelnen Rohrleitungselemente mithilfe von aufwändigen Verlege- und Schweißarbeiten fluiddicht miteinander verbunden werden, um ein unerwünschtes austreten des Wärmeübertragungsfluides an den Fügestellen der einzelnen Rohrleitungselemente zu vermeiden.

Die hohen Investitionskosten für die Errichtung eines derartigen Rohrsystems eines Wärmenetzes sind ein wesentliches Hindernis bei der Entwicklung und Errichtung von dezentralen erneuerbaren Wärmeversorgungssystemen. Dabei fällt ein großer Anteil der Investitionskosten auf die Herstellung und die Verlegung der wärmegedämmten Rohrleitungselemente.

Es wird deshalb als eine Aufgabe der vorliegenden Erfindung angesehen, ein Verfahren zur Errichtung eines Rohrleitungsabschnittes eines Rohrsystems in einem Wärmenetz so auszugestalten, dass ein Rohrleitungsabschnitt möglichst kostengünstig hergestellt und gleichzeitig mit möglichst geringen Wärmeverlusten kosteneffizient zur Übertragung von Fernwärme in einem Wärmenetz verwendet werden kann.

Diese Aufgabe wird erfindungsgemäß dadurch gelöst, dass in einem Segmentierungsschritt der Rohrleitungsabschnitt in mehrere Segmente unterteilt wird, wobei für jedes Segment auf der Grundlage von mindestens einer bodenphysikalischen Kenngröße eine Segmentkenngröße ermittelt wird und sich die ermittelten Segmentkenngrößen zweier benachbarter Segmente um mehr als einen vorgegebenen Segmentkenngrößendifferenzwert unterscheiden, und dass in einem Bettungsermittlungsschritt für jedes Segment eine Segmenteinbettung eines in diesem Segment in den Graben eingebrachten Rohrleitungssegments in einem wasserdurchlässigen Segmentbettungsmaterial so vorgegeben wird, dass innerhalb des Segmentes ein über das Segment gemittelter und auf eine Längeneinheit bezogener Wärmeverlust des in dem Rohrleitungssegment übertragenen Wärmeübertragungsfluides geringer als ein vorgegebener Wärmeverlustgrenzwert ist. Die Erfindung beruht dabei auf der Erkenntnis, dass es sowohl in ökologischer als auch in ökonomischer Hinsicht vorteilhaft ist, die Rohrleitung in dem Rohrleitungsabschnitt aus möglichst kostengünstig herstellbaren und verlegbaren Rohrleitungselementen herzustellen. Eine aufwändige Wärmedämmung der einzelnen Rohrleitungselemente wird dabei nicht als wesentliche und im Gegensatz zu herkömmlichen Wärmenetzen auch nicht als einzige Maßnahme angesehen, die den Wärmeverlust bei der Übertragung des Wärmeübertragungsfluides durch den betreffenden Rohrleitungsabschnitt möglichst gering werden zu lassen. Vielmehr wird berücksichtigt, dass herkömmlicherweise aufgrund der bodenphysikalischen Gegebenheiten in einzelnen Segmenten innerhalb des Rohrleitungsabschnittes mit größeren Wärmeverlusten eines nur gering oder sogar vernachlässigbar wärmegedämmten Rohrleitungselementes zu rechnen ist, während in anderen Segmenten ein die Rohrleitung umgebender Erdboden eine durch das die Rohrleitung umgebende Bettungsmaterial bewirkte Wärmedämmung begünstigen und verstärken kann. Eine Hauptursache für einen unerwünschten Wärmetransport von der Rohrleitung weg ist in vielen Fällen das im Erdboden vorhandene Bodenwasser, das zu einer Wasserbewegung in dem die Rohrleitung umgebenden Erdboden und auch in dem die Rohrleitung unmittelbar umgebenden Bettungsmaterial führt und durch die Wasserbewegung zu einem unerwünschten konvektiven Wärmetransport von der Rohrleitung weg führt.

Als wasserdurchlässig im Sinne der vorliegenden Erfindung werden alle Materialien angesehen, deren Durchlässigkeitsbeiwert im Betriebszustand des Wärmenetzes im wassergesättigten Zustand größer als 1·10⁻¹² m/s ist.

Eine Einbettung der Rohrleitung in ein wasserundurchlässiges Bettungsmaterial könnte einen Wärmeverlust durch Konvektion des Bodenwassers erheblich verringern oder nahezu vollständig vermeiden, ist jedoch mit erheblichen Herstellungskosten verbunden und stellt zudem hohe Anforderungen an einen mechanischen Schutz der Rohrleitung in dem Rohrleitungsabschnitt, da sich die Rohrleitung während der bestimmungsgemäßen Nutzung thermisch bedingt wiederholt ausdehnt und zusammenzieht.

In dem Segmentierungsschritt kann der Rohrleitungsabschnitt in mehrere Segmente unterteilt werden, die sich vorzugsweise hinsichtlich der hydraulischen und thermischen bodenphysikalischen Kenngrößen wie insbesondere der Bodenwassersättigung, der Saugspannung-Wassergehalts-Beziehung, der Permeabilität des Erdbodens für Fluide und insbesondere für Flüssigkeiten oder der Wärmekapazität, bzw. der Wärmeleitfähigkeit des Erdbodens unterscheiden. Nach der Einteilung des Rohrleitungsabschnitts in mehrere Segmente kann dann für jedes Segment eine für das betreffende Segment geeignete Segmenteinbettung ermittelt und so vorgegeben werden, dass mit Hilfe eines geeigneten, üblicherweise möglichst gering wasserdurchlässigen Segmentbettungsmaterials für das betreffende Segment und in Abhängigkeit der bodenphysikalischen Gegebenheiten ein über das Segment gemittelter und möglichst geringer Wärmeverlust erreicht wird, der jedenfalls geringer als ein vorgegebener Wärmeverlustgrenzwert ist. Die Wärmedämmung der in dem betreffenden Rohrleitungsabschnitt verlegten Rohrleitung wird dem zufolge nicht durch die Verwendung möglichst wärmegedämmter, doppelwandiger Rohrleitungselemente erreicht, sondern durch die möglichst geschickte Auswahl eines möglichst kostengünstig herstellbaren Segmentbettungsmaterials, in welches das Rohrleitungselement eingebettet wird und das die Funktion der Wärmedämmung übernimmt.

Dabei kann beispielsweise der vorgegebene Wärmeverlustgrenzwert dem Wärmeverlust entsprechen, der bei den derzeit herkömmlicherweise verwendeten doppelwandigen und thermisch isolierten Rohrleitungselementen erreicht werden kann. Ein geeignetes, wasserdurchlässiges Segmentbettungsmaterial kann beispielsweise ein mit geeigneten Zuschlagsstoffen versetztes Sandmaterial sein, wobei durch die Zuschlagsstoffe die Wärmeleitfähigkeit des Bettungsmaterials verringert und damit die wärmedämmenden Eigenschaften des Bettungsmaterials verbessert werden. Das Segmentbettungsmaterial übernimmt demzufolge nicht nur die Funktion einer mechanischen Schutzhülle um das in dem Graben verlegte Rohrleitungselement, sondern bewirkt auch eine effiziente Wärmedämmung des Rohrleitungselements und reduziert den Wärmeverlust des in dem Rohrleitungsabschnitt übertragenen Wärmeübertragungsfluides.

In Abhängigkeit von dem in jedem Einzelfall und in jedem einzelnen Segment verwendeten Segmentbettungsmaterial kann es möglich oder sogar vorteilhaft sein, wenn der Graben ausschließlich mit dem betreffenden Segmentbettungsmaterial wieder verfüllt wird, also das Verfüllungsmaterial dem Segmentbettungsmaterial entspricht. Die Verwendung von unterschiedlichen Materialien ist nicht notwendig. Vielmehr kann vorgesehen sein, den Graben vollständig mit dem Segmentbettungsmaterial zu verfüllen, falls beispielsweise der für die Verwendung von unterschiedlichen Materialien anfallende zusätzliche Kostenaufwand größer als die Mehrkosten des Segmentbettungsmaterials im Vergleich zu einem hiervon abweichenden Verfüllungsmaterial ist.

Gemäß einer Ausgestaltung des Erfindungsgedankens ist vorgesehen, dass in dem Segmentierungsschritt eine Aufteilung des Rohrleitungsabschnittes in mehrere Segmente auf der Grundlage von mindestens einer den Bodenwasserhaushalt beschreibenden bodenphysikalischen Kenngröße vorgenommen wird. Eine derartige den Bodenwasserhaushalt beschreibende bodenphysikalischen Kenngröße kann beispielsweise die Sättigung des Erdbodens mit Bodenwasser, die Permeabilität des Erdbodens für versickerndes oder aus dem Untergrund aufsteigendes Bodenwasser oder die Saugspannung-Wassergehalts-Beziehung, beziehungsweise die Saugspannung des Porenwassers im Erdboden sein. Der durch eine Konvektion von Feuchtigkeit und insbesondere von Porenwasser bewirkte Wärmeverlust stellt einen wesentlichen Anteil des insgesamt auftretenden Wärmeverlustes bei der Übertragung von dem Wärmeübertragungsfluid in dem erdverlegten Rohrleitungsabschnitt dar. Die den Bodenwasserhaushalt beschreibenden bodenphysikalischen Kenngrößen werden als besonders wichtige Kenngrößen für die Aufteilung des Rohrleitungsabschnittes in einzelne Segmente und die Vorgabe eines geeigneten Segmentbettungsmaterials für die einzelnen Segmente erachtet.

Um den Aufwand für das Beschaffen und Einbringen des Segmentbettungsmaterials in die einzelnen betreffenden Segmente zu reduzieren, ist gemäß einer vorteilhaften Ausgestaltung vorgesehen, dass das Segmentbettungsmaterial mindestens eines Segments einen Anteil an Grabensegmentmaterial aufweist, welches bei dem Ausheben des Grabens innerhalb des betreffenden Segments ausgehoben wurde. So kann ein Anteil des Segmentbettungsmaterials, beispielsweise eine durch Sieben erzeugte Feinkornfraktion des bei dem Ausheben des Grabens ausgehobenen Grabensegmentmaterials, vor Ort bereitgestellt werden, ohne dass dabei große Materialmengen über größere Distanzen transportiert werden müssen. Der betreffende Anteil an Grabensegmentmaterial kann durch geeignete Zuschlagstoffe aufbereitet und thermisch konditioniert werden, um bei der anschließenden Verwendung als Segmentbettungsmaterial eine ausreichende wärmedämmende Wirkung auf das mit dem aufbereiteten Grabensegmentmaterial umhüllte Rohrleitungselement auszuüben.

Es ist ebenfalls denkbar, dass das Segmentbettungsmaterial ausgehend von einem standardisierten Bettungsmaterial hergestellt wird, welches zunächst im Wesentlichen die mechanischen Anforderungen an eine zuverlässige Einbettung und geringe Beanspruchung der Rohrleitung erfüllt. Dabei kann es sich beispielsweise um ein geeignetes Sandmaterial handeln, welches bereits bei der herkömmlichen Einbettung von Rohrleitungen in ausgehobenen Gräben verwendet wird. Das standardisierte Bettungsmaterial kann für jedes einzelne Segment durch die Hinzugabe oder Beimischung von geeigneten Zuschlagstoffen thermisch konditioniert und mit den für die Wärmedämmung der Rohrleitung in dem betreffenden Segment erforderlichen Wärmedämmungseigenschaften ausgestattet werden.

Um eine möglichst kostengünstige Errichtung des Rohrleitungsabschnittes zu ermöglichen, ist gemäß einer Ausgestaltung des Erfindungsgedankens vorgesehen, dass das Rohrleitungssegment in mindestens einem Segment als Ringbundware zur Verfügung gestellt und von einer Transportrolle abgewickelt und in den ausgehobenen Graben eingebracht wird. Durch die Verwendung von Rohrleitungssegmenten, die eine große Länge von beispielsweise 50m, 100m oder mehr als 250m aufweisen können und raumsparend auf eine Transportrolle aufgerollt, transportiert und vor Ort bereitgehalten werden können, lassen sich die Herstellungs- und Verarbeitungskosten der Rohrleitung erheblich reduzieren. Es ist ebenfalls möglich, dass das von der Transportrolle abgewickelte Rohrleitungssegment beispielsweise mittels eines Rohrpfluges in den Graben eingezogen wird. Durch die Verwendung von vergleichsweise langen Rohrleitungselementen wird die Anzahl der Fügestellen zwischen den benachbarten Rohrleitungselementen erheblich reduziert, wodurch weniger zeitaufwändige und kostenintensive Schweißarbeiten zur fluiddichten Verbindung von aneinandergrenzenden Rohrleitungselementen anfallen.

In vorteilhafter Weise ist dabei optional vorgesehen, dass als Rohrleitungssegment ein Kunststoffrohrsegment mit einem auf eine Längeneinheit bezogenen Rohrleitungswärmeverlust in den ausgehobenen Graben eingebracht wird, wobei der Rohrleitungswärmeverlust höher als der vorgegebene Wärmeverlustgrenzwert ist. Um den vorgegebenen Wärmeverlustgrenzwert nicht zu überschreiten ist es deshalb erforderlich, dass das Segmentbettungsmaterial, welches das Rohrleitungssegment umgibt, einen nennenswerten und ggf. maßgeblichen Beitrag zu der Wärmedämmung des Rohrleitungssegmentes in dem Graben beiträgt. Wenn der Rohrleitungswärmeverlust vergleichsweise niedrig ist und den vorgegebenen Wärmeverlustgrenzwert nur geringfügig übersteigt, kann das Segmentbettungsmaterial, welches das Rohrleitungssegment umgibt, eine vergleichsweise geringe wärmedämmende Wirkung aufweisen und vergleichsweise kostengünstig aus herkömmlichen Bettungsmaterialien wie beispielsweise aus einem feinkörnigen Sandmaterial, gegebenenfalls aber auch aus einem grobkörnigen oder eine andere Konsistenz aufweisenden Grabenmaterial oder Erdmaterial hergestellt werden. Wird dagegen ein Kunststoffrohrsegment mit einem vergleichsweise hohen Rohrleitungswärmeverlust verwendet, so muss das umgebende Segmentbettungsmaterial einen großen und gegebenenfalls maßgeblichen Beitrag zu der Wärmedämmung des Rohrleitungssegments in dem Graben beitragen und die hierfür erforderlichen wärmedämmenden Eigenschaften aufweisen. Dafür kann das verwendete Kunststoffrohrsegment sehr kostengünstig ausgestaltet sein. In vielen Fällen kann durch eine geeignete Auswahl und Vorgabe des Kunststoffrohrsegments in Verbindung mit dem umgebenden Segmentbettungsmaterial erreicht werden, dass die einzelnen Komponenten sehr kostengünstig hergestellt und für die Errichtung des Rohrleitungssegments in dem betreffenden Segment verwendet werden.

Einer besonders vorteilhaften Ausgestaltung des Erfindungsgedankens zufolge ist vorgesehen, dass als Rohrleitungssegment kein doppelwandiges Rohr, sondern ein einwandiges Rohr, vorzugsweise ein einwandiges Rohr aus Polyethylen in den ausgehobenen Graben eingebracht wird. Ein einwandiges Rohr aus Polyethylen, das nicht von einem zusätzlichen wärmedämmenden Schaumstoff oder dergleichen umgeben ist, lässt sich besonders kostengünstig herstellen und als Ringbundware zu dem Graben transportieren und darin einbetten. Einwandige Polyethylenrohre sind in verschiedenen Durchmessern und Wandstärken handelsüblich und damit sehr kostengünstig erhältlich. Für das Einbringen eines einwandigen Kunststoffrohres in einen ausgehobenen Graben sind verschiedene Verlegeverfahren bekannt, die vergleichsweise rasch und kostengünstig durchgeführt werden können. Ein Rohrleitungssegment aus Polyethylen weist eine hohe Beständigkeit gegenüber den in einem Fernwärmeleitungsnetz auftretenden Temperaturen und Temperaturgradienten sowie den mechanischen Beanspruchungen während der Verlegung und bei einem anschließenden wechselnden Fernwärmetransport in dem Erdboden auf.

Durch die Verwendung von einwandigen Kunststoffrohren aus Polyethylen in Verbindung mit einem geeigneten Segmentbettungsmaterial, welches das Rohrleitungssegment umgibt und den Wärmeverlust in dem Rohrleitungssegment geringer als einen vorgegebenen Wärmeverlustgrenzwert werden lässt, ist eine deutliche Verringerung der für die Errichtung des Rohrleitungsabschnittes innerhalb des Wärmenetzes anfallenden Kosten im Vergleich mit einer herkömmlichen Errichtung eines vergleichbaren Rohrleitungsabschnittes mit doppelwandigen und wärmegedämmten Rohrleitungselementen möglich. Abschätzungen legen nahe, dass eine ganz erhebliche Kostenreduktion der anfallenden Gesamtkosten für die Errichtung des Rohrleitungsabschnittes möglich ist.

Die Erfindung betrifft auch einen Rohrleitungsabschnitt eines Rohrsystems in einem Wärmenetz, welches zur Übertragung eines Wärmeübertragungsfluides zwischen einem Wärmelieferanten und mindestens einem Wärmeabnehmer vorgesehen ist, wobei in dem Rohrleitungsabschnitt eine sich über den Rohrleitungsabschnitt erstreckende Rohrleitung zur Übertragung des Wärmeübertragungsfluides zusammen mit einem die Rohrleitung umgebenden Bettungsmaterial in einem unteren Bereich eines Grabens angeordnet ist, der in einem oberen Bereich mit einem Verfüllungsmaterial verfüllt ist. Beispielsweise in EP 3 165 831 A1 ist ein Rohrsystem eines Wärmenetzes beschrieben. Bei herkömmlichen Rohrleitungsabschnitten eines Wärmenetzes ist die sich über den Rohrleitungsabschnitt erstreckende Rohrleitung üblicherweise einheitlich ausgestaltet und aus einer großen Anzahl von doppelwandigen und wärmegedämmten stangenförmigen Rohrleitungselementen zusammengesetzt. Die einzelnen Rohrleitungselemente müssen in geeigneter Weise in den ausgehobenen Graben eingebracht und anschließend fluiddicht miteinander verbunden werden. Der hierfür anfallende Verarbeitungsaufwand ist vergleichsweise groß und führt zu hohen Investitionskosten bei der Errichtung des Rohrleitungsabschnittes.

Aus DE 102 02 186 A1 ist eine Anordnung für erdverlegte rohrförmige Versorgungsleitungen bekannt, bei der beabstandet voneinander mit einem ersten Verfüllmaterial verfüllte Schlauchkörper unter oder um einen Rohrleitungsabschnitt angeordnet sind und den Rohrleitungsabschnitt dadurch fixieren, während die Bereiche des Grabens zwischen den Schlauchkörpern mit einem anderen Verfüllungsmaterial verfüllt sind. Die Schlauchkörper und die damit einhergehend verwendeten unterschiedlichen Verfüllungsmaterialien sollen eine möglichst spannungsfreie und großflächige Lagerung eines Rohrleitungsabschnitts innerhalb des nachträglich eingebrachten Verfüllungsmaterials begünstigen und ermöglichen. Auswirkungen auf die Wärmeverluste des Rohrleitungsabschnitts sind dabei nicht berücksichtigt.

Weiter ist aus der EP 1 319 898 B1 eine im Boden verlegte Rohrleitung für eine Fernwärmeanlage bekannt, welche Leitungsrohre, die in einer mit Sand verfüllten Leitungszone eines Rohrgrabens eingebettet sind, umfaßt. Um eine Verringerung der Wärmeverluste zu ermöglichen, wird vorgeschlagen, daß zumindest 50 Gew.% der Sandverfüllung der Leitungszone aus gebranntem Ton bestehen. Es wird deshalb ebenfalls als eine Aufgabe der vorliegenden Erfindung angesehen, einen Rohrleitungsabschnitt der vorangehend genannten Gattung so auszugestalten, dass der Rohrleitungsabschnitt möglichst kostengünstig hergestellt werden kann und dennoch die bei der Übertragung des Wärmeübertragungsfluides durch den Rohrleitungsabschnitt ein vorgegebener Wärmeverlustgrenzwert nicht überschritten wird. Diese Aufgabe wird erfindungsgemäß dadurch gelöst, dass der Rohrleitungsabschnitt in mehrere Segmente unterteilt ist, wobei sich eine für jedes Segment auf der Grundlage von mindestens einer bodenphysikalischen Kenngröße ermittelte Segmentkenngröße zweier benachbarter Segmente um mehr als einen vorgegebenen Segmentkenngrößendifferenzwert unterscheidet, dass sich eine erste Segmenteinbettung eines in einem ersten Segment in den Graben eingebrachten ersten Rohrleitungssegmentes in einem ersten wasserdurchlässigen Segmentbettungsmaterial von einer zweiten Segmenteinbettung eines in einem zweiten Segment in den Graben eingebrachten zweiten Rohrleitungssegmentes in einem zweiten wasserdurchlässigen Segmentbettungsmaterial unterscheidet, und dass bei einem Erdboden innerhalb eines Segmentes, für welchen die ermittelte Segmentkenngröße bereits vorteilhafte und gegebenenfalls nahezu ausreichende Wärmedämmungseigenschaften aufweist, lediglich ein geringer Aufwand für ein daran angepasstes Segmentbettungsmaterial erforderlich ist und das verwendete Segmentbettungsmaterial niedrigere Wärmedämmungseigenschaften aufweist als bei einem Segment mit einem das Rohrleitungssegment umgebenden Erdboden, der hinsichtlich seiner bodenphysikalischen Eigenschaften wenig geeignet ist, um für das darin verlegte Rohrleitungssegment eine ausreichende Wärmedämmung bereitzustellen, in welchem ein daran angepasstes Segmentbettungsmaterial mit ausreichend hohen Wärmedämmungseigenschaften verwendet ist.

Die üblicherweise hohen Investitionskosten für die Errichtung eines Rohrleitungsabschnittes innerhalb eines Wärmenetzes können durch eine geeignete Unterteilung des Rohrleitungsabschnittes in mehrere Segmente und durch die Verwendung von einem an das betreffende Segment angepassten und kostengünstig bereitgestellten Segmentbettungsmaterial deutlich reduziert werden. Durch die Verwendung eines wasserdurchlässigen Segmentbettungsmaterials können eine kostenintensive Bereitstellung und zeitaufwändige Einbettung des Rohrleitungssegmentes in ein wasserundurchlässiges Bettungsmaterial vermieden werden. Die wärmedämmenden Eigenschaften des innerhalb eines Segmentes verwendeten wasserdurchlässigen Segmentbettungsmaterials sind dabei innerhalb eines jeden Segmentes so an die bodenphysikalischen Eigenschaften des umgebenden Erdbodens angepasst, dass durch das wasserdurchlässige Segmentbettungsmaterial ein für die Verwendung des Rohrleitungssegmentes innerhalb eines Wärmenetzes ausreichende Wärmedämmung bewirkt wird und auch bei einer reduzierten oder nicht nennenswerten gesonderten Wärmedämmung des Rohrleitungssegmentes ein übermäßiger Wärmeverlust bei der Durchleitung eines erwärmten Wärmeübertragungsfluides vermieden werden kann. Das jeweils verwendete Segmentbettungsmaterial kann hinsichtlich seiner verschiedenen Eigenschaften an das betreffende Segment angepasst und dabei so vorgegeben werden, dass neben den für die Einbettung des Rohrleitungssegmentes erforderlichen mechanischen Eigenschaften auch die für die Wärmedämmung erforderlichen thermischen und hydraulischen Eigenschaften des Segmentbettungsmaterials in vorteilhafter Weise angepasst sind, bzw. die diesbezüglichen Anforderungen erfüllt werden.

Dabei werden beispielsweise eine effektive Wärmeleitfähigkeit, eine Saugspannungs-Wassergehalts-Funktion (pF-Kurve), eine Permeabilität für Fluide sowie eine Wärmekapazität als besonders relevante thermische und hydraulische Kennwerte für das wasserdurchlässige Segmentbettungsmaterial angesehen. Hinsichtlich der mechanischen Eigenschaften werden die Verdichtung, die Lösbarkeit, die Festigkeit, die Formbeständigkeit sowie gegebenenfalls die Rheologie als wichtige mechanische Kennwerte für das in jedem Einzelfall verwendete wasserdurchlässige Segmentbettungsmaterial angesehen. Im Hinblick auf eine besonders ökonomische und ökologische Eignung des derart errichteten Wärmenetzes können darüber hinaus weitere Eigenschaften wie beispielsweise die Beständigkeit, das Umweltverhalten sowie die Recyclebarkeit des Rohrleitungssegmentes sowie des umgebenden Segmentbettungsmaterials berücksichtigt und in vorteilhafter Weise vorgegeben oder angepasst werden.

Im Unterschied zu herkömmlichen Wärmenetzen, bei denen ein erdverlegter Rohrleitungsabschnitt im Wesentlichen aus einer einheitlichen wärmegedämmten Rohrleitung besteht, welche in einem ebenfalls einheitlich vorgegebenen Bettungsmaterial verlegt ist, können durch die Unterteilung des Rohrleitungsabschnittes in verschiedene Segmente die jeweiligen bodenphysikalischen Gegebenheiten in den einzelnen Segmenten vorteilhaft ausgenutzt und dazu verwendet werden, den Herstellungsaufwand für ein wärmedämmendes Segmentbettungsmaterial und damit für eine ausreichende Wärmedämmung innerhalb des Segments zu reduzieren. Bei einem Erdboden innerhalb eines Segmentes, der bereits vorteilhafte und gegebenenfalls nahezu ausreichende Wärmedämmungseigenschaften aufweist, ist lediglich ein geringer Aufwand für ein daran angepasstes Segmentbettungsmaterial erforderlich. Ist dagegen der umgebende Erdboden hinsichtlich seiner bodenphysikalischen Eigenschaften wenig geeignet, um für ein darin verlegtes Rohrleitungssegment eine ausreichende Wärmedämmung bereitzustellen, kann diese wärmedämmende Funktion durch ein daran angepasstes Segmentbettungsmaterial mit ausreichend hohen Wärmedämmungseigenschaften übernommen und bereitgestellt werden.

Um für die Herstellung, bzw. Bereitstellung des Segmentbettungsmaterials auf einen oftmals aufwändigen und kostenintensiven Transport des Segmentbettungsmaterials von einem weit entfernten Herstellungsort zu dem ausgehobenen Graben und damit zu dem Verwendungsort hin zu reduzieren, ist optional vorgesehen, dass das Segmentbettungsmaterial von mindestens einem Segment einen Anteil an Grabensegmentmaterial ausweist, welches bei dem Ausheben des Grabens innerhalb des betreffenden Segmentes ausgehoben wurde. Das Segmentbettungsmaterial kann beispielsweise aus einer aufgearbeiteten Fraktion des ausgehobenen Grabensegmentmaterials vor Ort hergestellt werden, indem weitere Zuschlagsstoffe hinzugefügt werden und gegebenenfalls eine zusätzliche Verdichtung des in den Graben eingebrachten Segmentbettungsmaterials vorgenommen wird. Durch die Verwendung von vor Ort ausgehobenem Grabenmaterial kann das Transportvolumen und das Transportgewicht der zusätzlich an den Verlegungsort des Rohrleitungssegmentes, bzw. an den ausgehobenen Graben herbei zu transportierenden Segmentbettungsmaterialkomponenten deutlich reduziert werden. Zudem können auch die für eine anderenfalls erforderlich werdende Entsorgung des ausgehobenen Grabenmaterials anfallenden Entsorgungskosten reduziert werden.

Gemäß einer besonders vorteilhaften Ausgestaltung des Erfindungsgedankens ist vorgesehen, dass das Rohrleitungssegment in mindestens einem Segment mindestens ein Rohrleitungselement mit einer Länge von mehr als 20 Meter, vorzugsweise von mehr als 100 Meter und besonders vorzugsweise von mehr als 250 Meter aufweist. Das einzelne Rohrleitungselement mit einer derart großen Länge ist vorzugsweise als Ringbundware hergestellt und wird auf einer Transportrolle zu dem Graben, bzw. zu dem Verlegeort transportiert, und dort auf der Transportrolle zum Verlegen und Einbringen in den Graben bereitgestellt. Aufgrund der großen Länge der einzelnen Rohrleitungselemente sind in dem gesamten Rohrleitungsabschnitt deutlich weniger Fügestellen zwischen benachbarten Rohrleitungselementen vorhanden, die mit üblicherweise aufwändigen Schweißverfahren fluiddicht miteinander verbunden werden müssen. Dadurch kann der Herstellungsaufwand für einen derart ausgestalteten Rohrleitungsabschnitt weiter reduziert werden.

Um auch bei der Herstellung des innerhalb eines Segmentes verlegten Rohrleitungssegmentes Kosten einsparen zu können ist gemäß einer Ausgestaltung des Erfindungsgedankens vorgesehen, dass das Rohrleitungssegment ein Kunststoffrohrsegment mit einem auf eine Längeneinheit bezogenen Rohrleitungswärmeverlust aufweist, der höher als der vorgegebene Wärmeverlustgrenzwert ist. Vorzugsweise ist dabei vorgesehen, dass das Rohrleitungssegment ein einwandiges Kunststoffrohrleitungselement, besonders vorzugsweise ein einwandiges Kunststoffrohrleitungselement aus Polyethylen aufweist. Derartige Kunststoffrohre und insbesondere einwandige Kunststoffrohrleitungselemente aus Polyethylen sind handelsüblich und sehr kostengünstig erhältlich. Die für die Beschaffung und Verlegung derart günstiger Kunststoffrohrleitungselemente möglichen Kosteneinsparungen übersteigen die für die individuelle Anpassung und Bereitstellung des Segmentbettungsmaterials in den einzelnen Segmenten erforderlichen Zusatzkosten erheblich.

Auf diese Weise lässt sich ein aus mehreren Rohrleitungsabschnitten zusammengesetztes Wärmenetz mit einem deutlich geringeren Kostenaufwand im Vergleich zu herkömmlich ausgestalteten Wärmenetzen herstellen. Durch die geeignete Anpassung des Segmentbettungsmaterials in den einzelnen Segmenten, die in Abhängigkeit von den bodenphysikalischen Gegebenheiten entlang des Rohrleitungsabschnittes vorgegeben sind, kann auch bei Verwendung von wenig oder nicht wärmegedämmten Rohrleitungssegmenten eine ausreichende Wärmedämmung bewirkt und ein Wärmeverlust des in den Rohrleitungssegmenten übertragenen Wärmeübertragungsfluides unterhalb eines vorgegebenen Wärmeverlustgrenzwertes erreicht werden, sodass ein erfindungsgemäßes Wärmenetz mit vergleichbaren Betriebsparametern und insbesondere mit vergleichbaren Betriebskosten wie ein herkömmlich errichtetes Wärmenetz genutzt und betrieben werden kann. Unter Umständen kann es auch in Einzelfällen eine wirtschaftlich sinnvolle Entscheidung sein, dass absichtlich in einem Segment ein vergleichsweise hoher Wärmeverlust in Kauf genommen wird, wenn dadurch deutlich höhere Herstellungskosten für den betreffenden Rohrleitungsabschnitt vermieden werden können.

Nachfolgend werden einige Ausführungsbeispiele des Erfindungsgedankens näher erläutert, die in der Zeichnung dargestellt sind. Es zeigt:
Figur 1 eine schematische Darstellung eines Fernwärmesystems mit einem Wärmelieferanten und mit mehreren Wärmeabnehmern, wobei über ein Wärmenetz ein Wärmeübertragungsfluid von dem Wärmelieferanten zu den Wärmeabnehmern übertragen und nach einem Wärmeentzug bei den einzelnen Wärmeabnehmern wieder zu dem Wärmelieferanten zurückgeführt werden kann,
Figur 2 eine schematische Darstellung eines Rohrleitungsabschnittes innerhalb des Wärmenetzes, wobei der Rohrleitungsabschnitt in mehrere Segmente unterteilt ist, wobei sich benachbarte Segmente durch die bodenphysikalischen Eigenschaften des den Rohrleitungsabschnitt umgebenden Erdbodens unterscheiden,
Figur 3 eine Schnittansicht eines in einem Graben verlegten und in ein umgebendes Segmentbettungsmaterial eingebetteten Rohrleitungssegmentes längs einer Linie III - III in Figur 2, und
Figur 4 eine Schnittansicht längs einer Linie IV - IV in Figur 2 eines benachbarten Segmentes mit einem Rohrleitungssegment, das in einem Graben verlegt und von einem anderen Segmentbettungsmaterial als in Figur 3 dargestellt umgeben ist.

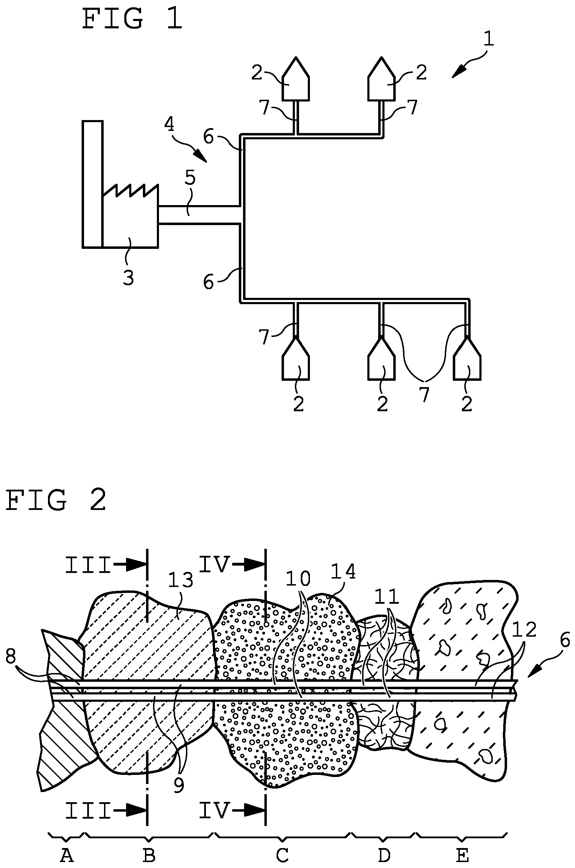

In Figur 1 ist schematisch ein Fernwärmesystem 1 zur Versorgung von mehreren Wärmeabnehmern 2 mit Wärmeenergie dargestellt, die von einem Wärmelieferanten 3 erzeugt wird. Der Wärmelieferant 3 kann beispielsweise ein Heizkraftwerk oder aber eine Müllverbrennungsanlage oder sonstige industrielle Anlage sein, bei der nutzbare Abwärme entsteht und für die Erwärmung eines Wärmeübertragungsfluides genutzt werden kann. Das mit Wärmeenergie beaufschlagte Wärmeübertragungsfluid wird von dem Wärmelieferanten 3 über ein Wärmenetz 4 zu den einzelnen Wärmeabnehmern 2 übertragen und nach einer von jedem Wärmeabnehmer 2 individuell möglichen Entnahme von Wärmeenergie wieder zu dem Wärmelieferanten 3 zurückgeführt, sodass für das Wärmeübertragungsfluid ein Kreislauf gebildet wird.

Das Wärmenetz 4 weist mehrere Rohrleitungsabschnitte 5, 6, 7 auf. Die einzelnen Rohrleitungsabschnitte 5, 6, 7 des Wärmenetzes 4 können unterteilt, bzw. zugeordnet werden zu einem üblicherweise mit dem Wärmelieferanten 3 verbundenen Transportnetz, zu einem daran anschließenden Verteilnetz sowie zu einzelnen Wärmeabnehmeranschlüssen aus dem Verteilnetz. Insbesondere für Rohrleitungsabschnitte 5, 6 innerhalb des Transportnetzes und des Verteilnetzes eignet sich eine erfindungsgemäße Aufteilung der betreffenden Rohrleitungsabschnitte 5, 6 in einzelne Segmente.

In Figur 2 ist schematisch ein Rohrleitungsabschnitt 6 innerhalb des Verteilnetzes des Wärmenetzes 4 dargestellt, wobei der Rohrleitungsabschnitt 6 zwei parallel verlegte Rohrleitungen für die Zuführung und für die Rückführung des Wärmeübertragungsfluids aufweist. Durch vorausgehende Untersuchungen sind bodenphysikalische Kenngrößen für den umgebenden Erdboden ermittelt worden. Auf der Grundlage der bodenphysikalischen Kenngrößen wie beispielsweise einer Saugspannung-Wassergehalts-Beziehung oder einer Permeabilität für Fluide wird in einem Segmentierungsschritt der Rohrleitungsabschnitt 6 in mehrere Segmente A, B, C, D und E unterteilt, wobei für jedes Segment A bis E auf der Grundlage von mindestens einer der ermittelten bodenphysikalischen Kenngrößen eine Segmentkenngröße ermittelt wird und sich die ermittelten Segmentkenngrößen zweier benachbarter Segmente A bis E um mehr als einen vorgegebenen Segmentgrößendifferenzwert unterscheiden. Auf diese Weise wird der Rohrleitungsabschnitt 6 in mehrere Segmente A bis E unterteilt, in denen innerhalb der betreffenden Segmente A bis E näherungsweise einheitliche bodenphysikalische Eigenschaften des umgebenden Erdbodens vorliegen, während sich die bodenphysikalischen Eigenschaften des umgebenden Erdbodens von zwei benachbarten Segmenten A bis E ausreichend deutlich, bzw. um mehr als einen vorgegebenen Segmentgrößendifferenzwert unterscheiden.

Dabei kann die Länge der einzelnen Segmente A bis E in Abhängigkeit des umgebenden Erdbodens entlang des Rohrleitungsabschnitts 6 variieren. Es hat sich gezeigt, dass im Hinblick auf eine kostengünstige Errichtung des Rohrleitungsabschnitts 6 vorteilhafte Längen der einzelnen Segmente A bis E zwischen weniger als 50 Meter oder 100 Meter einerseits sowie gegebenenfalls mehreren Kilometern andererseits variieren können.

Für jedes Segment A bis E wird in einem Bettungsermittlungsschritt ein wasserdurchlässiges Segmentbettungsmaterial so vorgegeben, dass innerhalb des Segmentes A bis E ein über das Segment A bis E gemittelter und auf eine Längeneinheit bezogener Wärmeverlust des in einem in den jeweiligen Segmenten A bis E verlegten Rohrleitungssegments 8, 9, 10, 11, 12 ein über das Segment A bis E gemittelter und auf eine Längeneinheit bezogener Wärmeverlust des in dem betreffenden Rohrleitungssegment 8, 9, 10, 11, 12 übertragenen Wärmeübertragungsfluids geringer als ein vorgegebener Wärmeverlustgrenzwert ist.

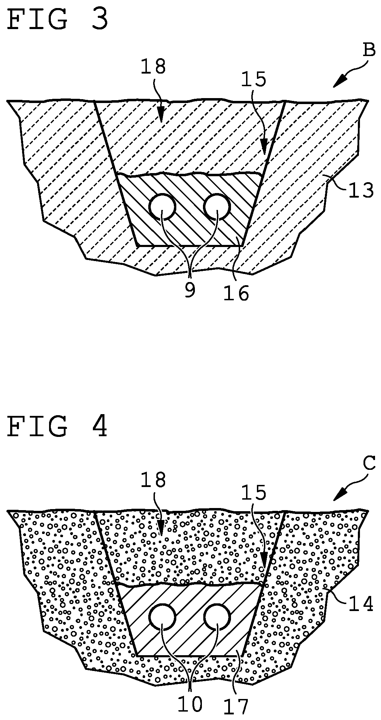

In den Figuren 3 und 4 sind exemplarisch zwei Schnittansichten entlang des in Figur 2 dargestellten Rohrleitungsabschnittes 6 dargestellt. Für die Verlegung der in den Figuren 3 und 4 exemplarisch dargestellten Rohrleitungssegmente 9, 10 wird zunächst aus dem Erdboden 13, 14 ein Graben 15 ausgehoben. In den Graben 15 wird in dem in Figur 3 schematisch dargestellten Segment B das Rohrleitungssegment 9 eingebracht und von einem an das Segment B angepassten Segmentbettungsmaterial 16 umgeben. In gleicher Weise wird bei dem in Figur 4 dargestellten Segment C das betreffende Rohrleitungssegment 10 in ein an das Segment C angepasstes Segmentbettungsmaterial 17 eingebettet, wobei sich dieses Segmentbettungsmaterial 17 von dem in Segment B eingebrachten Segmentbettungsmaterial 16 hinsichtlich seiner thermischen und hydrologischen Eigenschaften unterscheidet. Anschließend werden die verbleibenden und nicht mit dem jeweiligen Segmentbettungsmaterial 16, 17 aufgefüllten Grabenbereiche 18 mit dem jeweils vorher ausgehobenen Erdboden 13, 14 wieder verfüllt.

Bei den innerhalb der Segmente A bis E verlegten Rohrleitungssegmenten 8, 9, 10, 11, 12 handelt es sich jeweils um einwandige Kunststoffrohrleitungselemente aus Polyethylen, die lediglich geringe Wärmedämmungseigenschaften für ein durch die betreffenden Rohrleitungssegmente 8, 9, 10, 11, 12 zirkulierendes Wärmeübertragungsfluid aufweisen. Der Wärmeverlust wird demzufolge im Wesentlichen durch das die Rohrleitungssegmente 8, 9, 10, 11, 12 umgebende Segmentbettungsmaterial 16, 17 bewirkt. Zu diesem Zweck ist das in den jeweiligen Segmenten A bis E verwendete Segmentbettungsmaterial 16, 17 an die bodenphysikalischen Eigenschaften des umgebenden Erdbodens 13, 14 angepasst, um mit einem möglichst geringem Herstellungsaufwand für das betreffende Segmentbettungsmaterial 16, 17 dennoch eine möglichst gute Wärmedämmung und damit einhergehend einen möglichst geringen Wärmeverlust für das durch die Rohrleitungssegmente 8, 9, 10, 11, 12 in dem Rohrleitungsabschnitt 6 übertragene Wärmeübertragungsfluid zu bewirken.

## Patentansprüche

1. Verfahren zur Errichtung eines Rohrleitungsabschnitts (5, 6, 7) eines Rohrsystems in einem Wärmenetz (4), welches zur Übertragung eines Wärmeübertragungsfluids zwischen einem Wärmelieferanten (3) und mindestens einem Wärmeabnehmer (2) vorgesehen ist, wobei in dem Rohrleitungsabschnitt (5, 6, 7) ein sich über den Rohrleitungsabschnitt (5, 6, 7) erstreckender Graben (15) ausgehoben wird, wobei in den Graben (15) eine sich über den Rohrleitungsabschnitt (5, 6, 7) erstreckende Rohrleitung zur Übertragung des Wärmeübertragungsfluids entlang des Rohrleitungsabschnitts (5, 6, 7) eingebracht und in einem die Rohrleitung umgebenden Bettungsmaterial eingebettet wird, und wobei der Graben (15) anschließend mit einem Verfüllungsmaterial wieder verfüllt wird, **dadurch gekennzeichnet, dass** in einem Segmentierungsschritt der Rohrleitungsabschnitt (5, 6, 7) in mehrere Segmente (A, B, C, D, E) unterteilt wird, wobei für jedes Segment (A, B, C, D, E) auf der Grundlage von mindestens einer bodenphysikalischen Kenngröße eine Segmentkenngröße ermittelt wird und sich die ermittelten Segmentkenngrößen zweier benachbarter Segmente (A, B, C, D, E) um mehr als einen vorgegebenen Segmentkenngrößendifferenzwert unterscheiden, dass in einem Bettungsermittlungsschritt für jedes Segment (A, B, C, D, E) eine Segmenteinbettung eines in diesem Segment (A, B, C, D, E) in den Graben (15) eingebrachten Rohrleitungssegments (8, 9, 10, 11, 12) in einem wasserdurchlässigen Segmentbettungsmaterial (16, 17) so vorgegeben wird, dass innerhalb des Segments (A, B, C, D, E) ein über das Segment (A, B, C, D, E) gemittelter und auf eine Längeneinheit bezogener Wärmeverlust des in dem Rohrleitungssegment (8, 9, 10, 11, 12) übertragenen Wärmeübertragungsfluids geringer als ein vorgegebener Wärmeverlustgrenzwert ist.

2. Verfahren nach Anspruch 1, **dadurch gekennzeichnet, dass** in dem Segmentierungsschritt eine Aufteilung des Rohrleitungsabschnitts (5, 6, 7) in mehrere Segmente (A, B, C, D, E) auf der Grundlage von mindestens einer den Bodenwasserhaushalt beschreibenden bodenphysikalischen Kenngröße vorgenommen wird.

3. Verfahren nach Anspruch 1 oder Anspruch 2, **dadurch gekennzeichnet, dass** das Segmentbettungsmaterial mindestens eines Segments (A, B, C, D, E) einen Anteil an Grabensegmentmaterial aufweist, welches bei dem Ausheben des Grabens (15) innerhalb des betreffenden Segments (A, B, C, D, E) ausgehoben wurde.

4. Verfahren nach einem der vorausgehenden Ansprüche, **dadurch gekennzeichnet, dass** das Rohrleitungssegment (8, 9, 10, 11, 12) in mindestens einem Segment (A, B, C, D, E) als Ringbundware zur Verfügung gestellt und von einer Transportrolle abgewickelt und in den ausgehobenen Graben (15) eingebracht wird.

5. Verfahren nach einem der vorausgehenden Ansprüche, **dadurch gekennzeichnet, dass** als Rohrleitungssegment (8, 9, 10, 11, 12) ein Kunststoffrohrsegment mit einem auf eine Längeneinheit bezogenen Rohrleitungswärmeverlust in den ausgehobenen Graben (15) eingebracht wird, wobei der Rohrleitungswärmeverlust höher als der vorgegebene Wärmeverlustgrenzwert ist.

6. Verfahren nach einem der vorausgehenden Ansprüche, **dadurch gekennzeichnet, dass** als Rohrleitungssegment (8, 9, 10, 11, 12) kein doppelwandiges Rohr, sondern ein einwandiges Rohr, vorzugsweise ein einwandiges Rohr aus Polyethylen in den ausgehobenen Graben (15) eingebracht wird.

7. Rohrleitungsabschnitt (5, 6, 7) eines Rohrsystems in einem Wärmenetz (4), welches zur Übertragung eines Wärmeübertragungsfluids zwischen einem Wärmelieferanten (3) und mindestens einem Wärmeabnehmer (4) vorgesehen ist, wobei in dem Rohrleitungsabschnitt (5, 6, 7) eine sich über den Rohrleitungsabschnitt (5, 6, 7) erstreckende Rohrleitung zur Übertragung des Wärmeübertragungsfluids zusammen mit einem die Rohrleitung umgebenden Bettungsmaterial in einem unteren Bereich eines Grabens (15) angeordnet ist, der in einem oberen Bereich (18) mit einem Verfüllungsmaterial verfüllt ist, wobei der Rohrleitungsabschnitt (5, 6, 7) in mehrere Segmente (A, B, C, D, E) unterteilt ist, wobei sich eine für jedes Segment (A, B, C, D, E) auf der Grundlage von mindestens einer bodenphysikalischen Kenngröße ermittelte Segmentkenngröße zweier benachbarter Segmente (A, B, C, D, E) um mehr als einen vorgegebenen Segmentkenngrößendifferenzwert unterscheidet, und wobei sich eine erste Segmenteinbettung eines in einem ersten Segment (A, B, C, D, E) in den Graben (15) eingebrachten ersten Rohrleitungssegments (8, 9, 10, 11, 12) in einem ersten wasserdurchlässigen Segmentbettungsmaterial (16, 17) von einer zweiten Segmenteinbettung eines in einem zweiten Segment (A, B, C, D, E) in den Graben (15) eingebrachten zweiten Rohrleitungssegments (8, 9, 10, 11, 12) in einem zweiten wasserdurchlässigen Segmentbettungsmaterial (16, 17) unterscheidet, **dadurch gekennzeichnet, dass** bei einem Erdboden innerhalb eines Segmentes (A, B, C, D, E), für welchen die ermittelte Segmentkenngröße bereits vorteilhafte und gegebenenfalls nahezu ausreichende Wärmedämmungseigenschaften aufweist, lediglich ein geringer Aufwand für ein daran angepasstes Segmentbettungsmaterial (16, 17) erforderlich ist und das verwendete Segmentbettungsmaterial (16, 17) niedrigere Wärmedämmungseigenschaften aufweist als bei einem Segment (A, B, C, D, E) mit einem das Rohrleitungssegment (8, 9, 10, 11, 12) umgebenden Erdboden, der hinsichtlich seiner bodenphysikalischen Eigenschaften wenig geeignet ist, um für das darin verlegte Rohrleitungssegment (8, 9, 10, 11, 12) eine ausreichende Wärmedämmung bereitzustellen, in welchem ein daran angepasstes Segmentbettungsmaterial (16, 17) mit ausreichend hohen Wärmedämmungseigenschaften verwendet ist.

8. Rohrleitungsabschnitt (5, 6, 7) nach Anspruch 7, **dadurch gekennzeichnet, dass** mindestens ein Segmentbettungsmaterial (16, 17) einen Anteil an Grabensegmentmaterial aufweist, welches bei dem Ausheben des Grabens (15) innerhalb des betreffenden Segments (A, B, C, D, E) ausgehoben wurde.

9. Rohrleitungsabschnitt (5, 6, 7) nach Anspruch 7 oder Anspruch 8, **dadurch gekennzeichnet, dass** das Rohrleitungssegment (8, 9, 10, 11, 12) in mindestens einem Segment (A, B, C, D, E) mindestens ein Rohrleitungselement mit einer Länge von mehr als 20 Meter, vorzugsweise von mehr als 100 Meter und besonders vorzugsweise von mehr als 250 Meter aufweist.

10. Rohrleitungsabschnitt (5, 6, 7) nach einem der Ansprüche 7 bis 9, **dadurch gekennzeichnet, dass** das Rohrleitungssegment (8, 9, 10, 11, 12) ein Kunststoffrohrsegment mit einem auf eine Längeneinheit bezogenen Rohrleitungswärmeverlust aufweist, der höher als der vorgegebene Wärmeverlustgrenzwert ist.

11. Rohrleitungsabschnitt (5, 6, 7) nach einem der Ansprüche 7 bis 10, **dadurch gekennzeichnet, dass** das Rohrleitungssegment (8, 9, 10, 11, 12) ein einwandiges Kunststoffrohrleitungselement, vorzugsweise ein einwandiges Kunststoffrohrleitungselement aus Polyethylen aufweist.

## Claims

1. Method for constructing a pipeline portion (5, 6, 7) of a pipe system in a heating network (4) which is provided for transferring a heat transfer fluid between a heat supplier (3) and at least one heat consumer (2), wherein a trench (15) extending over the pipeline portion (5, 6, 7) is excavated in the pipeline portion (5, 6, 7), wherein a pipeline extending over the pipeline portion (5, 6, 7) for transferring the heat transfer fluid along the pipeline portion (5, 6, 7) is introduced into the trench (15) and is embedded in a bedding material surrounding the pipeline, and wherein the trench (15) is then backfilled with a backfill material again, **characterised in that**, in a segmentation step, the pipeline portion (5, 6, 7) is divided into a plurality of segments (A, B, C, D, E), wherein a characteristic segment variable is determined for each segment (A, B, C, D, E) based on at least one physical characteristic soil variable and the determined characteristic segment variables of two adjacent segments (A, B, C, D, E) differ by more than a predefined characteristic segment variable difference value, **in that** a segment embedding of a pipeline segment (8, 9, 10, 11, 12) introduced into the trench (15) in this segment (A, B, C, D, E) in a water-permeable segment bedding material (16, 17) is predefined in a bedding determination step for each segment (A, B, C, D, E) such that, within the segment (A, B, C, D, E), a length-unit-related heat loss, averaged over the segment (A, B, C, D, E), of the heat transfer fluid transferred in the pipeline segment (8, 9, 10, 11, 12) is less than a predefined heat loss limit value.

2. Method according to claim 1, **characterised in that** in the segmentation step, the pipeline portion (5, 6, 7) is divided into a plurality of segments (A, B, C, D, E) based on at least one physical characteristic soil variable describing the ground water balance.

3. Method according to claim 1 or claim 2, **characterised in that** the segment bedding material of at least one segment (A, B, C, D, E) comprises a portion of trench segment material which was excavated within the segment (A, B, C, D, E) in question during the excavation of the trench (15).

4. Method according to any of the preceding claims, **characterised in that** the pipeline segment (8, 9, 10, 11, 12) is provided in at least one segment (A, B, C, D, E) as a coiled bundle and is unwound from a transport reel and introduced into the excavated trench (15).

5. Method according to any of the preceding claims, **characterised in that** a plastics pipe segment having a length-unit-related pipeline heat loss is introduced into the excavated trench (15) as a pipeline segment (8, 9, 10, 11, 12), wherein the pipeline heat loss is greater than the predefined heat loss limit value.

6. Method according to any of the preceding claims, **characterised in that** the pipeline segment (8, 9, 10, 11, 12) which is introduced into the excavated trench (15) is not a double-walled pipe but a single-walled pipe, preferably a single-walled pipe made of polyethylene.

7. Pipeline portion (5, 6, 7) of a pipe system in a heating network (4) which is provided for transferring a heat transfer fluid between a heat supplier (3) and at least one heat consumer (4), wherein a pipeline extending over the pipeline portion (5, 6, 7) for transferring the heat transfer fluid is arranged in the pipeline portion (5, 6, 7) together with a bedding material surrounding the pipeline in a lower region of a trench (15), which is backfilled with a backfill material in an upper region (18), wherein the pipeline portion (5, 6, 7) is divided into a plurality of segments (A, B, C, D, E), wherein a characteristic segment variable, determined for each segment (A, B, C, D, E) based on at least one physical characteristic soil variable, of two adjacent segments (A, B, C, D, E) differs by more than a predefined characteristic segment variable difference value, and wherein a first segment embedding of a first pipeline segment (8, 9, 10, 11, 12), introduced into the trench (15) in a first segment (A, B, C, D, E), in a first water-permeable segment bedding material (16, 17) differs from a second segment embedding of a second pipeline segment (8, 9, 10, 11, 12), introduced into the trench (15) in a second segment (A, B, C, D, E), in a second water-permeable segment bedding material (16, 17), **characterised in that**, in ground within a segment (A, B, C, D, E) for which the determined characteristic segment variable already has advantageous and potentially almost sufficient thermal insulation properties, only a low amount of outlay is required for a segment bedding material (16, 17) adjusted thereto and the segment bedding material (16, 17) used has lower thermal insulation properties than in a segment (A, B, C, D, E) having ground surrounding the pipeline segment (8, 9, 10, 11, 12) that is less suitable in terms of its physical soil properties, in order to provide sufficient thermal insulation for the pipeline segment (8, 9, 10, 11, 12) laid therein in which a segment bedding material (16, 17) adjusted thereto having sufficiently high thermal insulation properties is used.

8. Pipeline portion (5, 6, 7) according to claim 7, **characterised in that** at least one segment bedding material (16, 17) comprises a portion of trench segment material which was excavated within the segment (A, B, C, D, E) in question during the excavation of the trench (15).

9. Pipeline portion (5, 6, 7) according to claim 7 or claim 8, **characterised in that** the pipeline segment (8, 9, 10, 11, 12) has, in at least one segment (A, B, C, D, E), at least one pipeline element having a length of greater than 20 metres, preferably greater than 100 metres, and particularly preferably greater than 250 metres.

10. Pipeline portion (5, 6, 7) according to any of claims 7 to 9, **characterised in that** the pipeline segment (8, 9, 10, 11, 12) comprises a plastics pipe segment having a length-unit-related pipeline heat loss that is greater than the predefined heat loss limit value.

11. Pipeline portion (5, 6, 7) according to any of claims 7 to 10, **characterised in that** the pipeline segment (8, 9, 10, 11, 12) is a single-walled plastics pipeline element, preferably a single-walled plastics pipeline element made of polyethylene.

## Revendications

1. Procédé de mise en place d'une section de canalisation (5, 6, 7) d'un système de conduite dans un réseau de chaleur (4), qui est prévu pour le transfert d'un fluide de transfert de chaleur entre un fournisseur de chaleur (3) et au moins un consommateur de chaleur (2), une tranchée (15) s'étendant sur la section de canalisation (5, 6, 7) étant creusée dans la section de canalisation (5, 6, 7), une canalisation pour le transfert du fluide de transfert de chaleur le long de la section de canalisation (5, 6, 7), s'étendant sur la section de canalisation (5, 6, 7), étant introduite dans la tranchée (15) et étant noyée dans un matériau d'enrobage entourant la canalisation, et la tranchée (15) étant ensuite de nouveau remplie avec un matériau de remplissage, **caractérisé en ce que**, dans une étape de segmentation, la section de canalisation (5, 6, 7) est subdivisée en plusieurs segments (A, B, C, D, E), une grandeur caractéristique de segment étant déterminée pour chaque segment (A, B, C, D, E) sur la base d'au moins une grandeur caractéristique physique du sol et les grandeurs caractéristiques de segment déterminées de deux segments voisins (A, B, C, D, E) se différenciant de plus d'une valeur de différence de grandeur caractéristique de segment prédéfinie, **en ce que**, dans une étape de détermination d'enrobage, un enrobage de segment d'un segment de canalisation (8, 9, 10, 11, 12) introduit dans la tranchée (15) dans ce segment (A, B, C, D, E) dans un matériau d'enrobage de segment (16, 17) perméable à l'eau est prédéfini pour chaque segment (A, B, C, D, E), de telle sorte qu'à l'intérieur du segment (A, B, C, D, E), une perte de chaleur moyennée sur le segment (A, B, C, D, E) et rapportée à une unité de longueur du fluide de transfert de chaleur transféré dans le segment de canalisation (8, 9, 10, 11, 12) est inférieure à une valeur limite de perte de chaleur prédéfinie.

2. Procédé selon la revendication 1, **caractérisé en ce que**, dans l'étape de segmentation, une subdivision de la section de canalisation (5, 6, 7) en plusieurs segments (A, B, C, D, E) est effectuée sur la base d'au moins une grandeur caractéristique physique du sol décrivant le régime hydrique du sol.

3. Procédé selon la revendication 1 ou la revendication 2, **caractérisé en ce que** le matériau d'enrobage de segment d'au moins un segment (A, B, C, D, E) présente une proportion de matériau de segment de tranchée qui a été creusée lors du creusement de la tranchée (15) à l'intérieur du segment (A, B, C, D, E) concerné.

4. Procédé selon l'une quelconque des revendications précédentes, **caractérisé en ce que** le segment de canalisation (8, 9, 10, 11, 12) est fourni dans au moins un segment (A, B, C, D, E) sous forme de matériau en couronne et est déroulé d'un rouleau de transport et introduit dans la tranchée (15) creusée.

5. Procédé selon l'une quelconque des revendications précédentes, **caractérisé en ce qu'**un segment de conduite en matière plastique ayant une perte de chaleur de canalisation rapportée à une unité de longueur est introduit dans la tranchée creusée (15) en tant que segment de canalisation (8, 9, 10, 11, 30 12), la perte de chaleur de canalisation étant supérieure à la valeur limite de perte de chaleur prédéfinie.

6. Procédé selon l'une quelconque des revendications précédentes, **caractérisé en ce que** le segment de canalisation (8, 9, 10, 11, 12) introduit dans la tranchée creusée (15) n'est pas une conduite à double paroi, mais une conduite à simple paroi, de préférence une conduite à simple paroi en polyéthylène.

7. Section de canalisation (5, 6, 7) d'un système de conduite dans un réseau de chaleur (4), qui est prévu pour le transfert d'un fluide de transfert de chaleur entre un fournisseur de chaleur (3) et au moins un consommateur de chaleur (4), une canalisation pour le transfert du fluide de transfert de chaleur, s'étendant sur la section de canalisation (5, 6, 7), étant agencée dans la section de canalisation (5, 6, 7) conjointement avec un matériau d'enrobage entourant la canalisation dans une zone inférieure d'une tranchée (15), qui est remplie dans une zone supérieure (18) d'un matériau de remplissage, la section de canalisation (5, 6, 7) étant subdivisée en plusieurs segments (A, B, C, D, E), une grandeur caractéristique de segment de deux segments voisins (A, B, C, D, E), déterminée pour chaque segment (A, B, C, D, E) sur la base d'au moins une grandeur caractéristique physique du sol, se différenciant de plus d'une valeur de différence de grandeur caractéristique de segment prédéfinie, et un premier enrobage de segment d'un premier segment de canalisation (8, 9, 10, 11, 12) introduit dans un premier segment (A, B, C, D, E) dans la tranchée (15) dans un premier matériau d'enrobage de segment (16, 17) perméable à l'eau se différenciant d'un deuxième enrobage de segment d'un deuxième segment de canalisation (8, 9, 10, 11, 12) introduit dans un deuxième segment (A, B, C, D, E) dans la tranchée (15) dans un deuxième matériau d'enrobage de segment (16, 17) perméable à l'eau, **caractérisée en ce que**, pour un sol à l'intérieur d'un segment (A, B, C, D, E), pour lequel la grandeur caractéristique de segment déterminée présente déjà des propriétés d'isolation thermique avantageuses et éventuellement presque suffisantes, seul un petit effort est nécessaire pour un matériau d'enrobage de segment (16, 17) adapté et le matériau d'enrobage de segment (16, 17) utilisé présente des propriétés d'isolation thermique plus faibles que pour un segment (A, B, C, D, E) avec un sol entourant le segment de canalisation (8, 9, 10, 11, 12), qui est peu approprié en ce qui concerne ses propriétés physiques de sol pour fournir une isolation thermique suffisante pour le segment de canalisation (8, 9, 10, 11, 12) qui y est posé, dans lequel un matériau d'enrobage de segment (16, 17) adapté ayant des propriétés d'isolation thermique suffisamment élevées est utilisé.

8. Section de canalisation (5, 6, 7) selon la revendication 7, **caractérisée en ce qu'**au moins un matériau d'enrobage de segment (16, 17) présente une proportion de matériau de segment de tranchée qui a été creusé lors du creusement de la tranchée (15) à l'intérieur du segment concerné (A, B, C, D, E).

9. Section de canalisation (5, 6, 7) selon la revendication 7 ou la revendication 8, **caractérisée en ce que** le segment de canalisation (8, 9, 10, 11, 12) présente dans au moins un segment (A, B, C, D, E) au moins un élément de canalisation ayant une longueur supérieure à 20 mètres, de préférence supérieure à 100 mètres et de manière particulièrement préférée supérieure à 250 mètres.

10. Section de canalisation (5, 6, 7) selon l'une quelconque des revendications 7 à 9, **caractérisée en ce que** le segment de canalisation (8, 9, 10, 11, 12) présente un segment de conduite en matière plastique ayant une perte de chaleur de canalisation rapportée à une unité de longueur qui est supérieure à la valeur limite de perte de chaleur prédéfinie.

11. Section de canalisation (5, 6, 7) selon l'une quelconque des revendications 7 à 10, **caractérisé en ce que** le segment de canalisation (8, 9, 10, 11, 12) présente un élément de canalisation en matière plastique à simple paroi, de préférence un élément de canalisation en matière plastique à simple paroi en polyéthylène.
